# EUROPEAN PATENT APPLICATION

(11) **EP 1 342 526 A2**
(43) Date of publication of application: **10.09.2003**
(21) Application number: 03004065.3
(22) Date of filing: 25.02.2003
(51) Int. Cl.: B23K 7/00, B23K 37/02

(54) **Slant cutting method**

(30) Priority: 26.02.2002 JP 2002049313
(71) Applicant: KOIKE SANSO KOGYO CO., LTD, Edogawa-ku, Tokyo (JP)
(72) Inventor: Koike, Yasuo, c/o Koike Sanso Kogyo Co., Ltd., Tokyo (JP); Furujo, Akira, c/o Koike Sanso Kogyo Co., Ltd., Tokyo (JP); Shinoda, Keiichi, c/o Koike Sanso Kogyo Co., Ltd., Tokyo (JP); Moriki, Tatsuya, c/o Koike Sanso Kogyo Co., Ltd., Tokyo (JP); Suzuki, Toshikazu, c/o Koike Sanso Kogyo Co., Ltd., Tokyo (JP)
(74) Representative: Westphal, Mussgnug & Partner

(57) **Abstract**

In a slant cutting method in which a cutting torch is slanted to cut a workpiece to trim a product, the cutting lines on the downstream side and on the upstream side are respectively extended at the intersecting portion, and the cutting torch is pivotally moved in a direction such that the pivot angle is made smaller when cutting direction of the cutting torch is changed toward the extended line of the cutting line at an end point as cut along the extended line. The cutting period and the area size of scraps can be reduced with this slant cutting method.

## Description

### Background of the Invention

### 1. Field of the Invention

This invention relates to a slant cutting method advantageous for slantly cutting a workpiece including a bevel cutting method.

### 2. Description of Prior Art

When a workpiece as represented by a steel plate is cut, thermal cutting methods such as a gas cutting, to preheat the plate, blasting flames as well as blowing oxygen to the steel plate, a plasma cutting blowing plasmatic oxygen to the workpiece such the steel plate or stainless steel plate, a laser cutting radiating laser beam as well as blowing oxygen or other gases to a metal plate or non-metal plate, are implemented in use of respective specialized cutting torches.

In a case that a product having a certain planer shape is trimmed from a steel or stainless plate, so called bevel cutting may be used for forming a slant surface of a preset angle at the edge of the product. With a plasma cutting, the cutting surface may be slant where cutting is made in aligning the plasma cutting torch in a vertical direction to the workpiece.

When the bevel cutting is implemented, cutting is so made that the cutting surface becomes a bevel surface having a preset angle even where the cutting line is curved by slanting the cutting torch corresponding to the targeted slant angle and by moving pivotally the cutting torch so as to direct in a normal direction with respect to the cutting line. Where the perpendicular property of the cutting surface is guaranteed in the plasma cutting, the plasma cutting torch is set with an angle compensating the gradient in accompany with the cutting to make the slant cutting in controlling the plasma cutting torch in substantially the same way as the bevel cutting.

Where targeted products are structured of compositions of the cutting lines made of circles, curves, and straight lines, or compositions of the cutting lines made of straight lines, the cutting speed is required to be reduced in consideration of the truck's inertia for moving the cutting torch when cutting transits from the cutting line on an upstream side to the cutting line on a downstream side at an intersecting position of the cutting lines extending in two directions. In this situation, there raises a problem in which a top edge of the product is broken due to melting under an excessive heating amount given to the matrix around the intersecting position according to reduction of the cutting speed. Therefore, the heating amount generated from the cutting torch is reduced as reduction of the cutting speed at the intersection position of the cutting lines extending in two directions, thereby preventing breakdown due to melting from occulting.

However, where the heat amount that the cutting torch generates is reduced, it is necessary to increase the heat amount again after the transition of the cutting line on the downstream side, and controlling inevitably becomes complicated. Accordingly, it is general to adapt the so-called pigtail cutting method in which continuous cutting is made at the intersection position of the cutting lines extending in two directions by extending the cutting lines extending in the respective directions toward the scrap side and coupling the extended lines of those lines with an arc.

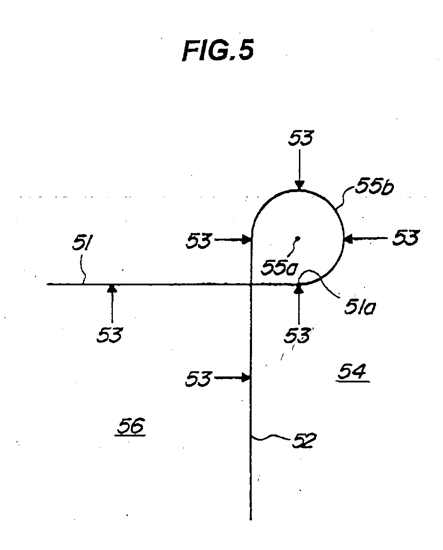

As shown in Fig. 5, in this cutting method at a time when the slant cutting is made continuously from the cutting line 51 on the upstream side to the cutting line 52 on the downstream side, the cutting torch 53 is maintained at a preset slant angle to extend the cutting line 51 to the side of the residual portion 54 to implement cutting; the cutting is continued along an arc 55b whose center is located at a preset point 55a from a prescribed position 51a as in a state that the cutting torch 53 directs the center 55 of the circumference 55b; and then, after reaching the extended line of the cutting line 52 on the downstream side, this cutting is maintained to make sawing in coupling to the cutting line 42 as well as to make slant cutting, thereby providing slant cutting at the cutting line 51, 52 at the edge of the product 56.

With the above pigtail cutting method, the cutting torch can be smoothly rotated, and the intersected angle at the intersection position between the cutting lines in the two directions can be formed with improved accuracy at the product, so that the accurate shape of the product is ensured.

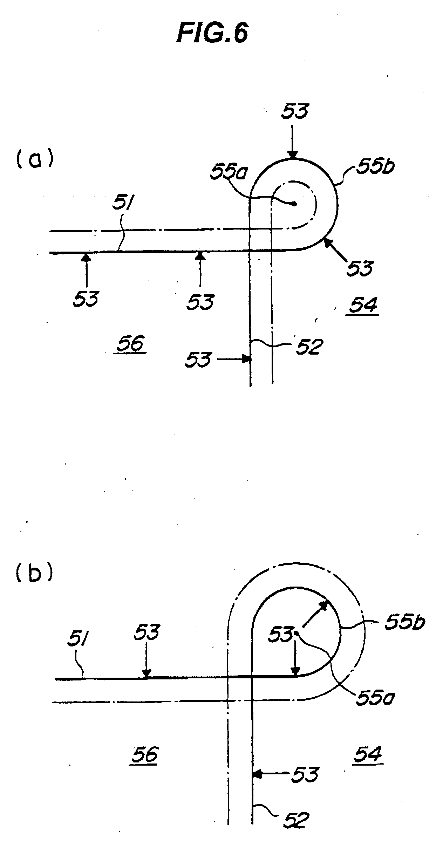

In the above pigtail cutting method, however, as shown in Fig. 6(a), where bevel cutting (upper side opening cutting or normal bevel) is made from the side of the product 56 to the side of the residual portion 54 with respect to the cutting lines 51, 52, heats are integrated around the center 55a of the arc 55b to increase the temperature of the matrix located at the vicinity of the arc 55b when cutting is made on the arc 55b at the residual portion 54 after finishing the cutting along the cutting line 51 on the upstream side, and consequently, there raises a problem that the intersected portion between the cutting lines 51, 52 is broken due to melting when the cutting is made on the cutting line 52 on the downstream side.

As shown in Fig. 6(b), where bevel cutting (lower side opening cutting or reverse bevel) is made from the side of the residual portion 54 to the side of the product 56 with respect to the cutting lines 51, 52, slant cutting is implemented in orienting outwardly along the arc 55b when the cutting is made on the arc 55b at the of the residual portion 54, so that there raises a problem that the residual portion 54 is widely cut to increase the scrap portion.

As described above, there is the problem that the large areas become scraps because the cutting is made in an arc shape at a position isolated from the cutting lines 51, 52 on the residual portion 54, and in fact, a development of a cutting method in which this problem is to be solved is requested.

Since the cutting is made along the arc shape, the cutting period at the scrap portions becomes longer, therefore raising a problem that the actual working period becomes longer.

### Summary of the Invention

It is an object of the invention to provide a slant cutting method which reducing an area becoming scraps at residual portions and which reducing cutting period at the scrap portion, as well.

The foregoing object is accomplished by a slant cutting method according to the invention in which a slant cutting method for continuously cutting an intersecting portion of cutting lines extending in two directions where a workpiece is cut as a thermally processing torch is slanted, the slant cutting method comprising the steps of: extending from the intersecting portion the respective cutting lines on upstream and downstream sides of the intersecting portion of the cutting lines extending in two directions; continuously cutting, with the thermally processing torch forming the cutting line on the upstream side, the workpiece along an extended line of the cutting line on the upstream side; pivotally moving the thermally processing torch in a direction rendering smaller a pivot angle of the thermally processing torch when a cutting direction of the thermally processing torch is changed on the extended line toward another extended line of the cutting line on the downstream side; moving then the thermally processing torch in connecting cutting toward the extended line of the cutting line on the downstream side; and pivotally moving the thermally processing torch in a direction rendering smaller another pivot angle of the thermally processing torch when the cutting direction of the thermally processing torch is changed as corresponding to the cutting line on the downstream side at a time that the thermally processing torch reaches the extended line of the cutting line on the downstream side.

With the slant cutting method, the necessary period for moving pivotally the thermally processing torch can be shortened because the thermally processing torch is pivotally moved in a direction rendering smaller a pivot angle of the thermally processing torch in a case where the thermally processing torch is moved pivotally so that the slanting direction of the thermally processing torch becomes the normal direction with respect to the cutting direction toward the extended line of the cutting line on the downstream side, where the cutting lines extending in two directions is extended from the intersecting portion, where cutting on the extended line is continued after cutting on the cutting line on the upstream side is made, and where the cutting direction is changed from the extended line toward another extended line of the cutting line on the downstream side, and also because the thermally processing torch is pivotally moved in a direction rendering smaller a pivot angle of the thermally processing torch in a case where the cutting direction of the thermally processing torch is changed as corresponding to the cutting line on the downstream side at a time that the thermally processing torch reaches the extended line of the cutting line on the downstream side.

More particularly, in a case that the cutting line (transition line) is a straight line where the thermally processing torch is moved from the extended line of the cutting line on the upstream side toward the extended line of the cutting line on the downstream side, both of the extended lines are coupled with the shortest distance, so that the cutting period can be shortened and so that the area of the portions becoming scraps can be reduced.

In the above slant cutting method, the cutting direction of thermally processing torch is changed toward the extended line of the cutting line on the downstream side where on the extended line of the cutting line on the upstream side the position of the thermally processing torch is changed to be for cutting the cutting line on the downstream side or is maintained as of cutting the cutting line on the upstream side, and then, at a time that the thermally processing torch reaches the extended line of the cutting line on the downstream side, the position of the thermally processing torch is preferably maintained where the position of the thermally processing torch is changed to be for cutting the cutting line on the downstream side whereas the position of the thermally processing torch is preferably changed where the position of the thermally processing torch is maintained as of cutting the cutting line on the upstream side.

With the above slant cutting method, the pivotal movement operation of the thermally processing torch can be completed at once. Therefore, the thermally processing torch can be transferred to the subsequent cutting line without stopping at positions at which no pivotal movement is operated on the extended line of the cutting line on the upstream side and the extended line of the cutting line on the downstream side, thereby rendering the cutting period shortened.

In another slant cutting method for continuously cutting an intersecting portion of cutting lines extending in two directions where a workpiece is cut along a cutting line or cutting lines extending in at least one direction as a thermally processing torch is slanted, the slant cutting method includes the steps of: extending from the intersecting portion the respective cutting lines on upstream and downstream sides of the intersecting portion of the cutting lines extending in two directions; continuously cutting, with the thermally processing torch forming the cutting line on the upstream side, the workpiece along an extended line of the cutting line on the upstream side; rendering vertical an angle of the thermally processing torch when a cutting direction of the thermally processing torch is changed on the extended line toward another extended line of the cutting line on the downstream side; moving then the thermally processing torch in connecting cutting toward the extended line of the cutting line on the downstream side; and slanting the thermally processing torch corresponding to a preset slant angle when the cutting direction of the thermally processing torch is changed as corresponding to the cutting line on the downstream side at a time that the thermally processing torch reaches the extended line of the cutting line on the downstream side.

With this slant cutting method, vertical cutting in which the thermally processing torch is disposed vertically with respect to the workpiece when cutting is made on the transition line coupling both of the extended lines can be implemented, so that the cutting speed can be increased in comparison with the slant cutting. Accordingly, the cutting period can be shortened when cutting is made on the transition line. Because cutting along the transition line is made by the vertical cutting method, the matrix may not receive unnecessary heat, so that good cutting can be made. Furthermore, where the transition line is cut by the vertical cutting method, the area of scrap portions in the workpiece can be reduced.

### Brief Description of the Drawings

The above and other objects, features and advantages of the present invention will become more apparent from the following description of the presently preferred exemplary embodiments of the invention taken in conjunction with the accompanying drawings, in which:
Fig. 1 is an illustration showing an example of a route and a position of a cutting torch when a normal bevel cutting is made;
Fig. 2 is an illustration showing an example of a route and a position of a cutting torch when a reverse bevel cutting is made;
Fig. 3 is an illustration showing an example of a method in which the cutting torch takes the same position as a position when the cutting torch cuts along another cutting line on any of extended lines of the cutting lines;
Fig. 4 is an illustration showing a route and a position at a time that the cutting torch is set vertically at a transition line;
Fig. 5 is an illustration showing a conventional pigtail cutting; and
Fig. 6 is an illustration showing a problem during the pigtail cutting.

### Detailed Description of the Preferred Embodiments

Hereinafter, preferred embodiments of the slant cutting method according to the invention are described. The slant cutting method according to the invention relates to a method for forming accurate edges on cutting surfaces at an intersecting portion among trimming lines (cutting lines) extending in different directions where cutting is made on products having a shape in combination of curves and straight lines or products having a shape in combination of plural straight lines. Particularly, where cutting is transferred, after cutting is made on a cutting line extending in one direction, to an extended line of a cutting line extending in another direction, pivotal movement direction of the thermally processing torch is regulated, thereby reducing the area of the scrap portions in the workpiece as well as the cutting period.

In the slant cutting method according to the invention, thermally processing torches (hereinafter referred to as "cutting torch"), e.g., a gas cutting torch in which cutting is made by burning a matrix with cutting oxygen projected from a flame opening where a steel plate is preheated with flames formed at the flame opening and by removing the melted matrix and the combustion products, a plasma cutting torch in which cutting is made by blowing plasmatic oxygen to the workpiece such as a steel plate or stainless steel plate to melt the matrix and by removing the melted matrix, and a laser cutting torch in which cutting is made by radiating laser beam to a metal or non-metal plate and by blowing oxygen or other gas thereto, are applicable when cutting targeted products having a preset slant angle from a workpiece.

In this invention, the gas cutting torch, the plasma cutting torch, and the laser cutting torch, as described above, are selectively usable as a cutting torch. Even where any of those cutting torch is used, however, slanting position and pivotal movement method of the cutting torch when the products are subject to the slant cutting is not changed. Therefore, a case that the plasma cutting torch is used as the cutting torch is described hereinafter.

A brief description is made for a process done with a plasma cutting method when, e.g., a steel plate is cut. First, oxygen gas serving as a plasma gas is supplied to a space between an electrode attached to the cutting torch and a nozzle, and a pilot arc is formed by discharging between the electrode and the nozzle. Subsequently, the plasmatic oxygen (pilot arc) is projected from the nozzle to the workpiece, and when the pilot arc comes in contact with the workpiece, a main arc is generated by discharging between the electrode and the workpiece and by cutting off the discharge between the electrode and the nozzle as the same time. By the heat from the main arc, the workpiece is melted, and by the oxygen constituting the main arc, the matrix is oxidized, thereby removing the melted objects with the energy of the main arc. The cutting is implemented by a trace at which the melted objects are continuously removed upon - moving the cutting torch under the above condition.

Thus, with the plasma cutting method, a groove formed when the melting objects including the matrix are removed tends to have a wider upper side and a narrower lower side because the main arc is at a very high temperature as to make a temperature difference between the upper and lower sides of the workpiece. Therefore, where the cutting torch is set vertically with respect to the workpiece to make cutting, a gentle gradient is formed on the cutting surface. To ensure the vertical degree of the cutting surface, it is therefore required to cut the workpiece in slanting the cutting torch as to be able to compensate the gradient. In this situation, the slant cutting method of the invention is applicable, and cutting can be made advantageously.

In a case where a bevel cutting is made, the beveling angle as a slanting angle of the cutting torch may vary according to the conditions such as the plate thickness and material of the workpiece, and the scope of the slanting angle is plus and minus 45 degrees with a reference of the vertical direction in a normal direction of the cutting line.

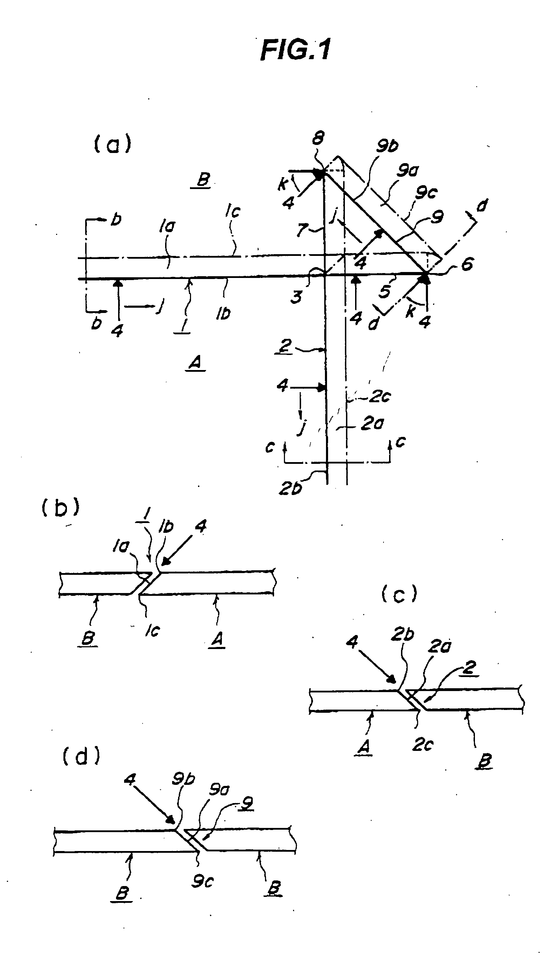

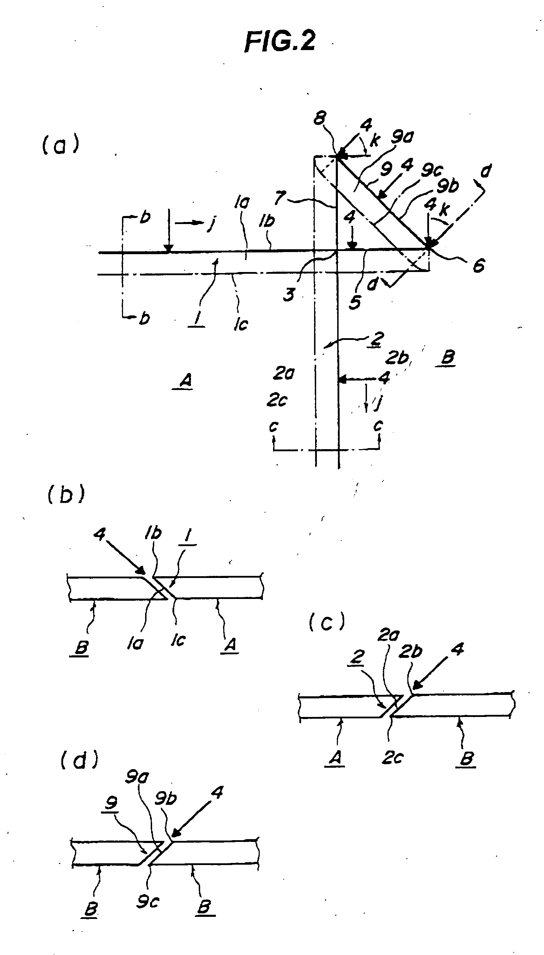

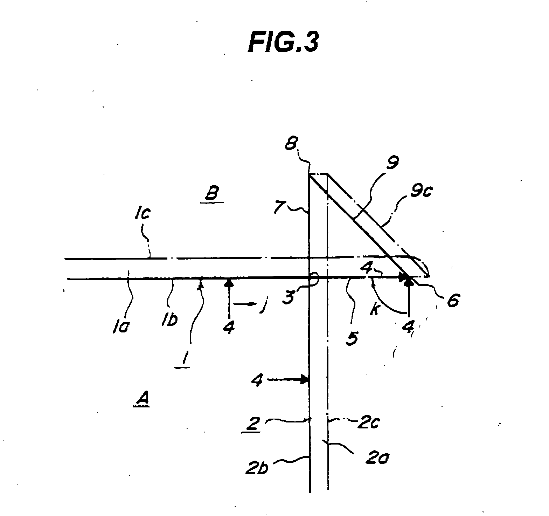

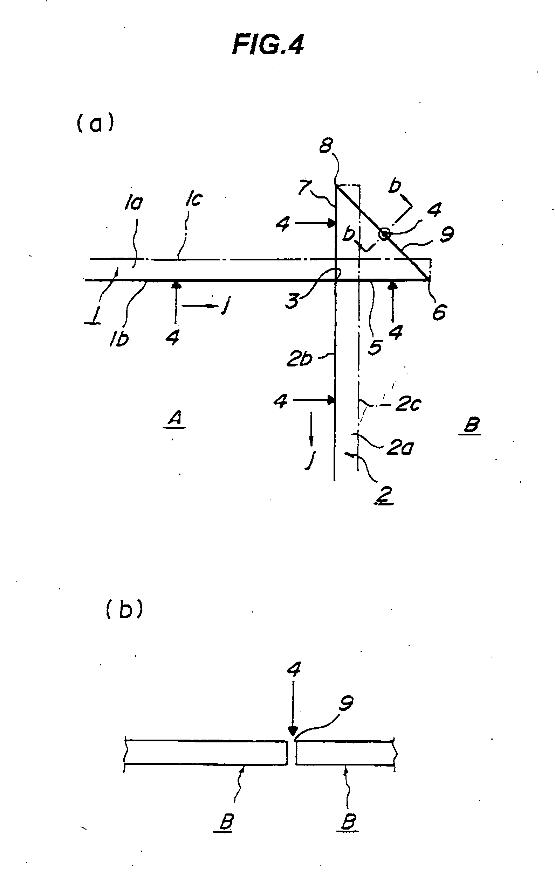

Next, a preferred embodiment of the slant cutting method according to the invention is described with reference to the drawings. Fig. 1 is an illustration showing an example of a route and a position of a cutting torch when a normal bevel cutting is made; Fig. 2 is an illustration showing an example of a route and a position of a cutting torch when a reverse bevel cutting is made; Fig. 3 is an illustration showing an example of a method in which the cutting torch takes the same position as a position when the cutting torch cuts along another cutting line on any of extended lines of the cutting lines; and Fig. 4 is an illustration showing a route and a position at a time that the cutting torch is set vertically at a transition line.

As described above, the slant cutting method of the invention is to provide a solution as to how cutting is made efficiently when transited from one cutting line to another cutting line at a comer portion of the targeted product, or namely, at the intersected portion of the cutting lines. Therefore, Fig. 1 to Fig. 3 show only the intersecting portion of the cutting lines.

Now, referring to Fig. 1, a cutting method for a normal bevel cutting is described. As shown in Fig. 1, the product A has an intersecting portion 3 at which cutting lines 1, 2 as straight lines extending in two directions are intersected. Any of the cutting lines 1, 2 can be the cutting line on the upstream side, and in this embodiment, the cutting line 1 is a cutting line on the upstream side whereas the cutting line 2 is a cutting line on the downstream side. Accordingly, the cutting torch 4 executes cutting to the workpiece 4 as moving along arrow j.

The normal bevel cutting is for rendering the cutting surfaces 1a, 2a face upwardly when viewed from the top of the product A. The cutting torch 4 is therefore, as shown in Fig. 1, disposed in a slanting manner with a present angle (e.g., 45 degrees in this embodiment) from the side of the product A to the side of the workpiece B or the scrap. It is to be noted that in regard with the cutting lines 1, 2, numerals 1b, 2b denote upper edge lines of the cutting surfaces 1a, 2a whereas numerals 1c, 2c denote lower edge lines of the cutting surfaces 1a, 2a.

An extended line 5 is set on an extension of the cutting line 1 on a side closer to the workpiece B with respect to the intersecting portion 3, and the extended line 5 is defined by an end point 6 set at a position having a preset distance from the intersecting portion 3. The distance from the intersecting portion 3 to the end point 6, or namely, the length of the extended line 5, is properly set according to cutting conditions such as the plate thickness of the workpiece B, the slanting angle and the cutting speed of the cutting torch 4 while cutting is made along the cutting line 1, and cannot be set unequivocally.

For example, where the cutting speed is high, the length of the extended line 5 is set in consideration of the inertia of the truck because the inertial of the truck for traveling the cutting torch 4 becomes large. Where a workpiece having a thick thickness is cut with a large angle, the cutting speed as well as the inertia of the truck are lowered, but since the heat amount of the workpiece B becomes large, the length of the extended line 5 is set in consideration of the heat amount.

An extended line 7 is set on an extension of the cutting line 2 on a side closer to the workpiece B with respect to the intersecting portion 3, and the extended line 7 is defined by a start point 8 set at a position having a preset distance from the intersecting portion 3. The distance from the intersecting portion 3 to the start point 8, or namely, the length of the extended line 7, is properly set according to cutting conditions such as the plate thickness of the workpiece B, the slanting angle and the cutting speed of the cutting torch 4 while cutting is made along the cutting line 2.

Accordingly, the lengths of the extended lines 5, 7 are properly set in accordance with the cutting conditions of the respective cutting lines 1, 2. Therefore, the lengths of the extended lines 5, 7 are the same where the cutting conditions for the cutting lines 1, 2 are the same (e.g., the slanting angle of the cutting torch 4 is the same) to each other, whereas the lengths of the extended lines 5, 7 are different from each other where the cutting conditions for the cutting lines 1, 2 are different from each other.

The connection such that the end point 6 of the extended line 5 and the start point 8 of the extended line 7 are coupled with a straight line or such that those are coupled with a folded line made of plural straight lines is not restricted, but it is preferable to set the connection according to the conditions such as the plate thickness and the material of the workpiece B. In this embodiment, a transition line 8 made of a sole straight line connects the end point 6 with the start point 8 to be the shortest distance.

When the cutting torch 4 slanted with the preset angle reaches the end point 6 of the extended line 5, the cutting torch 4 can be pivotally moved for a short time by setting the slanting direction of the cutting torch 4 to a normal direction of the transition line 9 and by moving the cutting torch 4 in a direction that the pivotal angle becomes the smallest (arrow k direction).

When the cutting torch 4 reaches the start point 8 of the extended line 7 via the transition line 9, the cutting torch 4 can be pivotally moved for a short time by moving the cutting torch 4 in a direction that the pivotal angle becomes the smallest (arrow k direction) so that the slanting direction of the cutting torch 4 is a direction that can execute the normal bevel cutting as the object.

When the cutting torch 4 is pivotally moved at the end point 6 or the start point 8, the cutting torch 4 is moved pivotally around a control center for cutting the product A as a reference. That is, when the product A is cut out by the cutting torch 4, it is preferable to control the pivotal movement of the cutting torch 4 at either the end point 6 or the start point 8 depending on whether the control corresponds to a figure of the upper edges 1b, 2b of the cutting surfaces 1a, 2a or to a figure of the lower edges 1c, 2c.

In this embodiment, the control reference for the cutting torch 4 is set as the upper edges 1b, 2b. Therefore, the sides of the lower edges (1c, 2c) are changed to be in a fan shape at the end point 6 and the start point 8 under a state that the positions of the cutting entry points of the cutting torch 4 for the workpiece B coincide to the corresponding end point 6 and start point 8.

Next, the steps when the above normal bevel cutting is implemented are described. First, the cutting torch 4 implementing the cutting for trimming the product A performs the normal bevel cutting along the cutting line 1. As a result, the cutting surface 1a is formed having a slanted angle of 45 degrees along the cutting line 1 of the product A, thereby providing the normal bevel cutting.

After the cutting torch 4 reaches the intersecting portion 3, the normal bevel cutting is continued toward the extended line 5 from the intersecting portion 3. The normal bevel cutting for the extended line 5 is done as to reduce the cutting speed while the cutting torch 4 keeps the same slant angle to that for the cutting line 1, and is stopped when the cutting torch 4 reaches the end point 6.

After the cutting torch 4 stops upon reaching the end point 6, the cutting torch 4 moves pivotally around the end point 6 as a center on a top surface of the workpiece B so that the normal direction of the transition line 9 coincides to the slanted angle of the cutting torch 4. The pivotal direction of the cutting torch 4 is so set as to minimize the pivotal moving angle at that time.

That is, upon calculation of the angle between the extended line 5 and the transition line 9, the cutting torch 4 is pivotally moved in a direction such that the angle is equal to or less than 180 degrees at that time. In this embodiment, the angle between the extended line 5 and the transition line 9 at the end point 6 becomes the smallest when the cutting torch 4 is moved pivotally in arrow k direction, and therefore, the cutting torch 4 is moved pivotally toward arrow k direction at the end point 6 when the cutting torch 4 thus cutting along the extended line 5 reaches the end point 6.

To move the cutting torch 4 in a manner described above, a cutting program setting the pivotal movement direction is entered in advance in a control device for controlling the traveling of the truck mounting the cutting torch 4, or concurrently with a program for cutting the product A, a program is memorized in which the pivotal movement direction is recognized in calculating the angle between the transition line 9 at the end point 6 and at the start point 8.

The cutting torch 4 cuts the workpiece toward the start point 8 of the extended line 7 where the slanting direction coincides to the normal direction of the transition line 9 in accordance with the pivotal movement of the cutting torch 4. Thus, cutting on the transition line 9 is made as the cutting torch 4 is being slanted. As shown in Fig. 1 (d), the cutting surface 9a having the upper edge 9b and the lower edge 9c is formed at the workpiece B. The cutting surface 9a is a slanted surface, and the lower edge 9c is formed outward of the transition line 9 (or in a direction isolating from the product A). The scope including the lower end 9c therefore becomes scraps.

The cutting torch 4 increases the cutting speed to make cutting from the end point 6 to the transition line 9, and reduces the cutting speed as approaching the start point 8 of the extended line 7. When the cutting torch 4 reaches the start point 8, the cutting torch 4 stops at the start point 8.

The cutting torch 4 reaching the start point 8 moves pivotally around the start point 8 as a center to extend the slanted direction in a normal direction to the cutting line 2. The pivotal moving direction of the cutting torch 4 is set to a direction rendering the pivotal angle minimized.

That is, the slanted direction of the cutting torch 4 is confirmed as to satisfy the slanted direction of the cutting surface at the cutting line 2, and the angle between the transition line 9 and the extended line 7 is calculated. The cutting torch 4 is moved pivotally in a direction that the angle becomes 180 degrees or less. In this embodiment, the angle between the transition line 9 and the extended line 7 at the start point 8 is made the smallest when the cutting torch 4 is moved pivotally in arrow k direction, and therefore, the cutting torch 4 is moved pivotally in arrow k direction at the start point 8 to coincide the slanted direction with the slanted direction of the cutting line 2 when the cutting torch 4 making cutting along the transition line 9 reaches the start point 8.

Then, the slant cutting is initiated from the start point 8 to the extended line 7; the cutting speed is increased to be for the cutting line 2 while cutting is made on the extended line 7; and then, cutting is made on the cutting line 2 upon entry of cutting to the product A from the intersecting portion 3.

With the above normal bevel cutting, because the extended lines 5, 7 of the cutting lines 1, 2 are coupled straightly with the transition line 9, the total length of the cutting lines is shortened in comparison with the cutting in an arc shape by the pigtail method, so that the time required for cutting can be reduced. The route for cutting the workpiece B is approximately in a triangle shape, so that the area becoming scraps is made smaller in comparison with the cutting in the arc shape.

Next, a cutting method for reverse bevel cutting is described in reference to Fig. 2. It is to be noted that the same reference numbers are provided to portions having the same functions, respectively, as those in the embodiment described above, and such a description is omitted.

In Fig. 2, the product A has an intersecting portion 3 at which cutting lines 1, 2 as straight lines extending in two directions are intersected. Any of the cutting lines 1, 2 can be the cutting line on the upstream side, and in this embodiment, the cutting line 1 is a cutting line on the upstream side whereas the cutting line 2 is a cutting line on the downstream side. Accordingly, the cutting torch 4 executes cutting to the workpiece 4 as moving along arrow j.

The reverse bevel cutting is for rendering the cutting surfaces 1a, 2a face downwardly when viewed from the top of the product A. The cutting torch 4 is therefore, as shown in Fig. 2, disposed in a slanting manner with a present angle (e.g., 45 degrees in this embodiment) to the side of the product A from the side of the workpiece B or the scrap. It is to be noted that in regard with the cutting lines 1, 2, numerals 1b, 2b denote upper edge lines of the cutting surfaces 1a, 2a whereas numerals 1c, 2c denote lower edge lines of the cutting surfaces 1a, 2a.

With the cutting torch 4, the reverse bevel cutting is continued toward the extended line 5 from the intersecting portion 3, and the reverse bevel cutting is done as to reduce the cutting speed while the cutting torch 4 keeps the same slant angle to that for the cutting line 1 on the extended line 5, and is stopped when the cutting torch 4 reaches the end point 6. After the cutting torch 4 stops at the end point 6, the cutting torch 4 moves pivotally around the end point 6 as a center so that the normal direction of the transition line 9 coincides to the slanted angle of the cutting torch 4. The pivotal direction of the cutting torch 4 is so set as to minimize the pivotal moving angle at that time.

In this embodiment, the angle between the extended line 5 and the transition line 9 at the end point 6 becomes the smallest when the cutting torch 4 is moved pivotally in arrow k direction, and therefore, the cutting torch 4 is moved pivotally toward arrow k direction at the end point 6 when the cutting torch 4 thus cutting along the extended line 5 reaches the end point 6.

The cutting torch 4 cuts the workpiece toward the start point 8 of the extended line 7 where the slanting direction of the cutting torch 4 coincides to the normal direction of the transition line 9. Thus, cutting on the transition line 9 is made as the reverse bevel cutting in which the cutting torch 4 is slanted. As shown in Fig. 2(d), the cutting surface 9a having the upper edge 9b and the lower edge 9c is formed at the workpiece B. With the cutting surface 9a, since the lower edge 9c is formed inward of the transition line 9 (or in a direction closer to the product A), the scope including the upper end 9b becomes scraps.

When the cutting torch 4 reaches the start point 8 of the extended line 7, the cutting torch 4 stops at the start point 8 and is pivotally moved at the start point 8 in arrow k direction so that the slanting direction of the cutting torch 4 is a direction that can execute the reverse bevel cutting on the cutting line 2 and in a direction normal to the cutting line 2. Then, the slant cutting is initiated from the start point 8 to the extended line 7; the cutting speed is increased to be for the cutting line 2 while cutting is made on the extended line 7; and then, reverse bevel cutting is made on the cutting line 2 upon entry of cutting to the product A from the intersecting portion 3.

With the above reverse bevel cutting, because the extended lines 5, 7 of the cutting lines 1, 2 are coupled straightly with the transition line 9, the total length of the cutting lines is shortened in comparison with the cutting in an arc shape by the pigtail method, so that the time required for cutting can be reduced. The route for cutting the workpiece B is approximately in a triangle shape, so that the area becoming scraps is made smaller in comparison with the cutting in the arc shape.

Fig. 3 shows that, in the above normal bevel cutting, the cutting torch 4 is moved pivotally at the end point 6 of the extended line 5 of the cutting line 1 so that the position of the cutting torch 4 coincides to the position when the cutting line 2 is cut at one time. In this situation, the cutting torch 4 at the end point 6 is moved pivotally in a direction rendering the slanted angle smaller, as in the same manner as that in the above embodiments.

The position at which the cutting torch 4 is pivotally moved is set to any of the end point 6 of the extended line 5 or the start point 8 of the extended line 7.

In the slant cutting method shown in Fig. 4, the product A is subject to the normal bevel cutting, and vertical cutting is made on the transition line 9 from the end point 6 of the extended line 5 of the cutting line 1 to the start point 8 of the extended line 7 of the cutting line 2.

When the cutting torch 4 cutting along the cutting line 1 reaches the end point 6 of the extended line 5 and stops, the slanted angle of the cutting torch 4 is changed to be vertical in reference to the end point 6 on the workpiece B. Then, the cutting torch 4 is moved along the transition line 9 to cut along the transition line 9 and stops when reaching the start point 8 of the extended line 7. After the cutting torch 4 is slanted at the start point 8 to coincide to the bevel angle of the cutting line 2, cutting is initiated for the extended line 7, and the speed is increased up to the cutting speed of the cutting line 2.

With this slant cutting method, the cutting torch 4 when cutting along the transition line 9 becomes vertical with respect to the workpiece B, and it is easy to set the cutting torch 4 reaching the start point 8 of the extended line 7 to have a necessary slanted angle for conducting the bevel cutting on the cutting line 2. Therefore, it is advantageous in a case that the slanted angle of the cutting line 1 is different from the slanted angle of the cutting line 2.

With the above slanted cutting method, it is advantageous where at least one of the cutting line (e.g., cutting line 1) is for bevel cutting whereas the other cutting line or lines (e.g., cutting line 2) are for bevel cutting or bevel cutting with an angle different from that of the cutting line 1, or further where the cutting condition is different between the cutting lines of the two directions, such as vertical cutting or the like.

Particularly, the cutting speed when cutting is made on the transition line 9 can be large to make vertical cutting along the transition line 9, and the area of the scraps is not so large unlike the normal bevel cutting. Therefore, the cutting period can be shortened, and the scrap area can be reduced.

It is to be noted that in the above embodiments, the cutting torch 4 is of the plasma cutting torch, but the cutting method according to the embodiments is unchanged even where the gas cutting torch or laser cutting torch is used.

Where the cutting torch 4 is the plasma cutting torch , it is preferable to lower the output less than the output for cutting along the cutting line 1 according to the reduction of the cutting speed when the cutting is made along the extended line 5 of the cutting line 1 toward the end point 6. When cutting is made from the start point 8 to the extended line 7, it is preferable to control the output as to increase up to the output for cutting along the cutting line 2 according to the increased cutting speed.

To perform the above control, when the extended line 5, the transition line 9, the extended line 7 are cut, excessive heat may not be given to the workpiece B, and no breakdown due to melting occurs at the triangle portions formed by the respective lines. Therefore, good intersecting portions 3 can be formed by suppressing excessive heat entry to the intersecting portions 33 of the product A.

As described above, with the slant cutting method according to the invention, when the cutting direction is changed on an extended line of one cutting line toward an extended line of another cutting line, the pivotal moving direction of the cutting torch is set in a direction such that the pivotal angle becomes smaller, thereby shortening the necessary time to pivotally move the cutting torch. Particularly, when the cutting torch is moved from the extended line of one cutting line to the extended line of another cutting line, by coupling both of the extended lines with the shortest distance, the cutting period is shortened, and the area of the portion to be scraped in the workpiece can be reduced.

In another slant cutting method, when both of the extended lines is coupled with the shortest distance, the vertical cutting in which the thermally processing torch is arranged vertically to the workpiece can be used, so that the cutting speed can be increased in comparison with the case for slant cutting, and so that good cutting can be operated without providing unnecessary heat to the matrix. Therefore, the cutting time can be shortened when cutting is made on the transition line, and the area of the scrap portions in the workpiece can be reduced.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined by the claims set forth below.

## Claims

1. A slant cutting method for continuously cutting an intersecting portion of cutting lines extending in two directions where a workpiece is cut as a thermally processing torch is slanted, the slant cutting method comprising the steps of:
extending from the intersecting portion the respective cutting lines on upstream and downstream sides of the intersecting portion of the cutting lines extending in two directions;
continuously cutting, with the thermally processing torch forming the cutting line on the upstream side, the workpiece along an extended line of the cutting line on the upstream side;
pivotally moving the thermally processing torch in a direction rendering smaller a pivot angle of the thermally processing torch when a cutting direction of the thermally processing torch is changed on the extended line toward another extended line of the cutting line on the downstream side;
moving then the thermally processing torch in connecting cutting toward the extended line of the cutting line on the downstream side; and
pivotally moving the thermally processing torch in a direction rendering smaller another pivot angle of the thermally processing torch when the cutting direction of the thermally processing torch is changed as corresponding to the cutting line on the downstream side at a time that the thermally processing torch reaches the extended line of the cutting line on the downstream side.

2. The slant cutting method according to Claim 1, wherein the cutting direction of thermally processing torch is changed toward the extended line of the cutting line on the downstream side where on the extended line of the cutting line on the upstream side the position of the thermally processing torch is changed to be for cutting the cutting line on the downstream side or is maintained as of cutting the cutting line on the upstream side, and wherein at a time that the thermally processing torch reaches the extended line of the cutting line on the downstream side the position of the thermally processing torch is maintained where the position of the thermally processing torch is changed to be for cutting the cutting line on the downstream side whereas the position of the thermally processing torch is changed where the position of the thermally processing torch is maintained as of cutting the cutting line on the upstream side.

3. A slant cutting method for continuously cutting an intersecting portion of cutting lines extending in two directions where a workpiece is cut along a cutting line or cutting lines extending in at least one direction as a thermally processing torch is slanted, the slant cutting method comprising the steps of:
extending from the intersecting portion the respective cutting lines on upstream and downstream sides of the intersecting portion of the cutting lines extending in two directions;
continuously cutting, with the thermally processing torch forming the cutting line on the upstream side, the workpiece along an extended line of the cutting line on the upstream side;
rendering vertical an angle of the thermally processing torch when a cutting direction of the thermally processing torch is changed on the extended line toward another extended line of the cutting line on the downstream side;
moving then the thermally processing torch in connecting cutting toward the extended line of the cutting line on the downstream side; and
slanting the thermally processing torch corresponding to a preset slant angle when the cutting direction of the thermally processing torch is changed as corresponding to the cutting line on the downstream side at a time that the thermally processing torch reaches the extended line of the cutting line on the downstream side.
